Europäisches Patentamt

(19) European Patent Office

Office européen des brevets

(11) Publication number: **0 224 366 B1**

(12) EUROPEAN PATENT SPECIFICATION

(45) Date of publication of patent specification: **22.07.92** (51) Int. Cl.⁵: **H04N 9/80**

(21) Application number: **86308926.4**

(22) Date of filing: **14.11.86**

(54) Method of and apparatus for converting and processing television signals.

(30) Priority: **14.11.85 JP 255454/85**

(43) Date of publication of application:
**03.06.87 Bulletin 87/23**

(45) Publication of the grant of the patent:
**22.07.92 Bulletin 92/30**

(84) Designated Contracting States:
**AT DE FR GB NL**

(56) References cited:
**EP-A- 0 033 607         EP-A- 0 133 026**
**EP-A- 0 201 906         US-A- 3 986 202**
**US-A- 4 456 930         US-A- 4 491 861**

(73) Proprietor: **SONY CORPORATION**
**7-35 Kitashinagawa 6-chome Shinagawa-ku**
**Tokyo 141(JP)**

(72) Inventor: **Hashimoto, Toshitaka**
**c/o Sony Corporation 7-35 Kitashinagawa**
**6-chome**
**Shinagawa-ku Tokyo(JP)**
Inventor: **Nakaya, Hideo**
**c/o Sony Corporation 7-35 Kitashinagawa**
**6-chome**
**Shinagawa-ku Tokyo(JP)**

(74) Representative: **Ayers, Martyn Lewis Stanley**
**et al**
**J.A. KEMP & CO. 14 South Square Gray's Inn**
**London, WC1R 5EU(GB)**

**Description**

The present invention relates to a method of and apparatus for converting and processing a television signal suited for a high-definition television signal.

It is well known that extremely broad bandwidth is used for a so-called high-definition television signal (hereinafter to be briefly called the HD video signal) as compared with video signals for the current standard systems (such as NTSC system). For recording the HD video signal, a digital recording system is preferred because it provides high quality of reproduced image and causes, in dubbing, small deterioration in the image quality.

However, the bandwidths and sampling frequencies required for recording the HD video signal become as large, for example, as the following

| (1) video signal bandwidths | Y | 25.0MHz |
| | $C_W$ | 12.5MHz |
| | $C_N$ | 12.5MHz |
| (2) sampling frequencies | Y | 64.8MHz |
| | $C_W$ | 32.4MHz |
| | $C_N$ | 32.4MHz |

In case of eight bit quantization for each sample, the data rate of the digital data in such specification becomes 1037MB/s, which is extremely high as compared with the case of the so-called 4-2-2 type of digital VTR (sampling frequency: 13.5MHz) in the current standard system (NTSC system). Even in the case where parallel recording through four channels is practised, for example, the data rate for each channel exceeds 250MHz. Thus, there was a problem that it was very difficult to manufacture a magnetic head system capable of such high speed recording and circuit devices used for the signal processing system to process the signal to be supplied to such a magnetic head.

In view of the above defect, it is well-known in the art that the high-speed data signals obtained by sampling the broadband video signals such as the aforementioned high-resolution video signals can be converted into low-speed data signals. For example, in European Patent Application EP-A-0 133 026 published on 13 February 1985, it is disclosed that the high-speed data signals corresponding to the displayed picture are vertically divided into N sections wherein N is an integer larger than 2 and the frequencies of the divided data signals are frequency-converted by 1/N and transferred through N-channel transmission lines for subsequent image processing.

US-A-4,456,930 discloses a low definition digital video signal in which the components of the signal are temporally divided and distributed among a plurality of tracks for recording.

However, in the case of data signals having the above described specification of the high definition video signal recorded on magnetic tape by rotary magnetic head, there still are difficulties in recording bandwidth, even if the frequency band of the data signal is reduced by means of the aforementioned band reduction manner.

It is an object of the present invention to provide an improved method and apparatus for transferring a data signal having a high sampling frequency.

It is another object of the present invention to provide a new method and apparatus for transferring digital data signals comprising component video signals, wherein the digital data signals corresponding to the displayed picture are divided into N sections for band reduction.

It is a further object of the present invention to provide a method and apparatus for transferring and processing digital data signals comprising component video signals, wherein the component video signals are each reduced in frequency band and the reduced component video signals are sequentially interleaved with each other.

According to a first aspect of the invention, there is provided a method of converting and processing a plurality of digital data signals, which comprise first, second and third component video signals, the method comprising the steps of:

spatially dividing each of said digital data signals corresponding to the displayed picture into N sections thereof, wherein N is an integer larger than 2;

expanding the divided digital data signals to have a period N times the period of the clock frequency of said digital data signals to produce divided and expanded digital data signals; and

distributing each of the divided and expanded digital data signals into a respective set of two channels of transmission lines by disposing data of said first component video signal in said two channels of

2

transmission lines alternately and with a sample space therebetween; and

discarding alternate data of each of said second and third component video signals and transmitting the remaining alternate data of said second and third component video signals alternately during those sample spaces not occupied by said first component video signal of each of the transmission lines.

According to a second aspect of the invention, there is provided apparatus for converting and processing a plurality of digital data signals, which comprise first, second and third component video signals characterised in that it comprises

means for spatially dividing each of said digital data signals corresponding to the displayed picture into N sections thereof, wherein N is an integer larger than 2;

means for expanding each of the divided digital data signals to have a period N times the period of the clock frequency of said digital data signals; and

means for distributing each of the divided and expanded digital data signals from said expanding means into a respective set two channels of transmission lines;

said distributing means comprising means for disposing said first component video signal in said two channels of transmission lines alternately and with a sample space; and

means for discarding alternate data samples of each of said second and third component video signals and means for transmitting the remaining alternate data samples of said second and third component video signals during the sample spaces not occupied by said first video signal of each of the transmission lines alternately.

The invention is equal applicable to video signals in colour-difference and R-G-B formats.

In the drawings:-

Figure 1 is a block circuit diagram of one embodiment of the present invention.

Figure 2 illustrates the processing of a video image by the apparatus of Figure 1.

Figure 3 shows in more detail the image area dividing circuit of the apparatus of Figure 1.

Figure 4 is a timing diagram of the operation of the circuit of Figure 3.

An embodiment of the method for transferring a television signal according to the present invention applied to digital magnetic recording of the HD video signal will be described below with reference to the accompanying drawings.

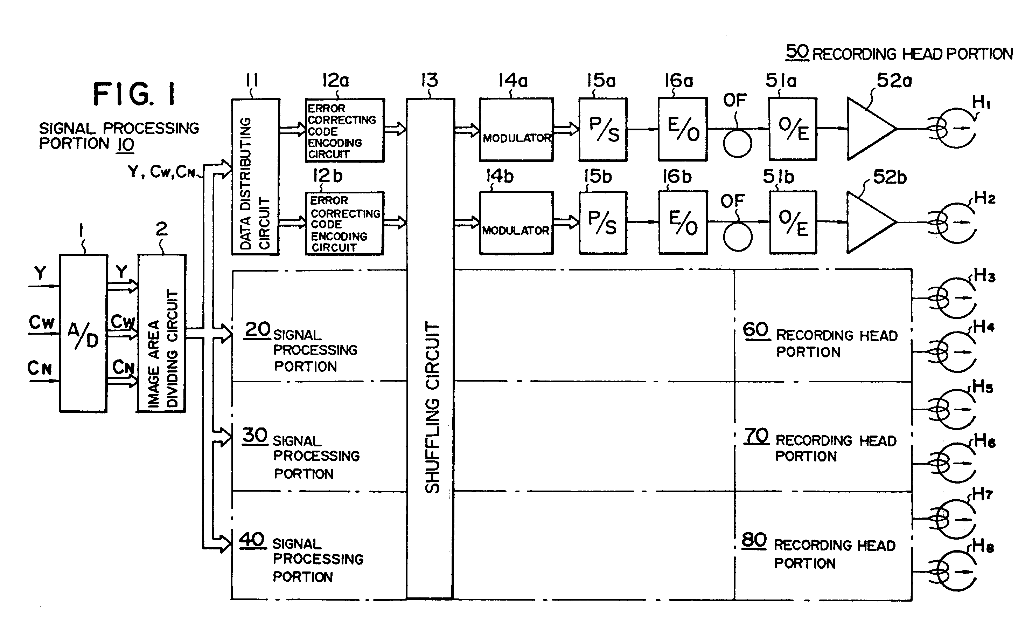

Referring to Figure 1, a luminance component signal Y and chrominance component signals $C_W$ and $C_N$ are supplied to an analog/digital converter 1. The frequency bandwidths of the signals Y, $C_W$, and $C_N$ are, for example, 25 MHz, 12.5 MHz, and 12.5 MHz, respectively, as described above, which are sampled in the analog/digital converter 1 at 64.8 MHz, 32.4 MHz, and 32.4 MHz, respectively, where the quantization number of each sample is 8 bits.

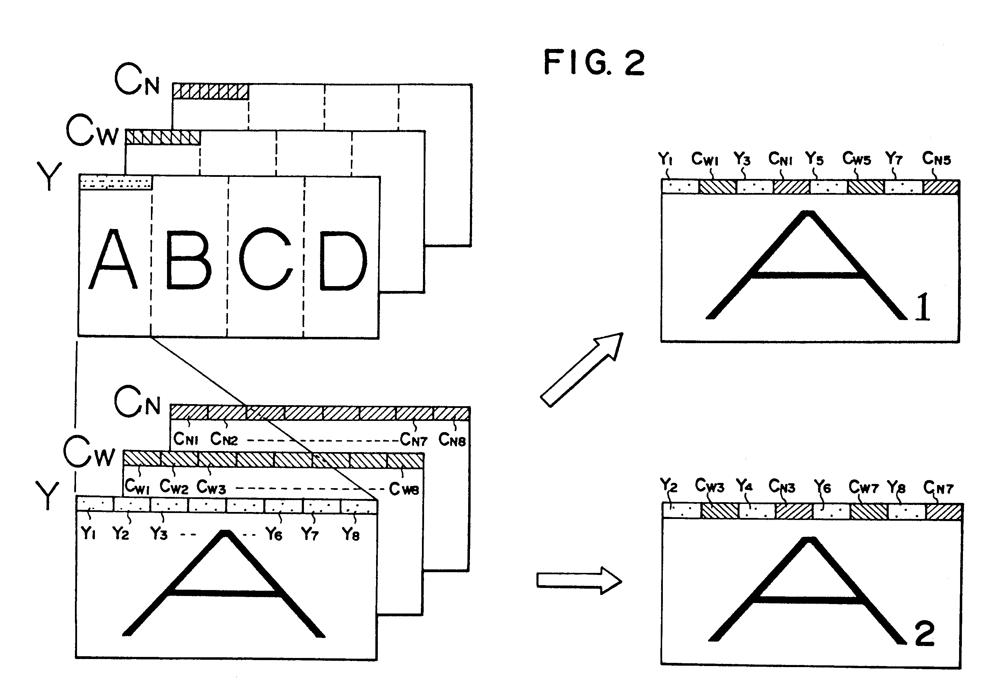

The signals Y, $C_W$, and $C_N$ which are digitized in the analog/digital converter 1 are all supplied to an image area dividing circuit (parallel dividing circuit) 2. This image area dividing circuit 2 is used for dividing each of the signals Y, $C_W$ and $C_N$ into equal intervals in the horizontal direction on the television screen as shown in Figure 2. Each signal is divided into four sections in the present embodiment. Corresponding to the four outputs of the image area dividing circuit 2, four signal processing portions 10, 20, 30 and 40 are provided in parallel, and the outputs of the image area dividing circuit 2 are supplied to their respective signal processing portions 10 - 40.

Since the signal processing portions 10 - 40 are all of the same structure, the first signal processing portion 10 only will be described and illustrated and illustration and description of detailed structure of the second to fourth signal processing portions 20 - 40 will be omitted here.

A signal processing portion 10 includes a data distributing circuit 11, which distributes data of the divided signals Y, $C_W$, and $C_N$ supplied from the image area dividing circuits 2 to two error-correcting code encoding circuits 12a and 12b. By this distribution, there are formed two channels in the signal processing portion 10. Output of both of the error-correcting code encoding circuits 12a and 12b are supplied through a shuffling circuit 13 common to all the signal processing portions 10 - 40 to modulator circuits 14a and 14b and modulated therein, for example, by the scramble NRZ system. The outputs of both of the modulators 14a and 14b are converted into serial data in parallel/serial converters 15a and 15b, respectively, and supplied to electricity/light conversion elements 16a and 16b.

The optical outputs from the electricity/light conversion elements 16a and 16b are supplied through optical fibers OF, respectively, to light/electricity conversion elements 51a and 51b of a recording head portion 50 to be converted therein back to electrical signals. It should be noted here that interference by mixing in of electrical noise specifically in the high frequency domain is prevented by the use of the optical transmission line. The outputs of the electricity/light converting elements 51a and 51b are supplied through amplifiers for recording 52a and 52b to recording magnetic heads $H_1$ and $H_2$.

In like manner, the second, third and fourth signal processing portions 20, 30 and 40 are connected through optical fibers with the second, third and fourth recording head portions 60, 70 and 80, and the recording head portions 60 - 80 include two recording heads $H_3$, $H_4$; $H_5$, $H_6$; and $H_7$, $H_8$, respectively.

Although it is omitted in the illustration, the four recording magnetic heads $H_1$, $H_2$, $H_3$ and $H_4$ are formed integrally with one another and the four recording magnetic heads $H_5$, $H_6$, $H_7$ and $H_8$ are also formed integrally with one another and these two head groups are attached to a rotating drum at an angle of 180°. Since a magnetic tape (a metallic tape, for example) is wrapped around the drum at a wrapping angle of approximately 330°, eight tracks are simultaneously recorded by both of the head groups; it is arranged such that 16 tracks correspond to one field period.

The mechanism of the digital VTR of the present embodiment is based upon the format type C and the speed of revolution of the drum is arranged to be 7200 rpm. A one inch wide tape travels at the speed of approximately 800 mm/s, and a 14-inch (35.56 cm) reel for three-hour play for a VTR of the format type C can be used for 1.5 hours of recording or playback.

Now, the operation of the present embodiment will be described with reference to Figure 2.

By means of the parallel dividing process in the image area dividing circuit 2, the sampling frequency for the output therefrom is reduced to 16.2 MHz, 1/4 of the previously mentioned 64.8 MHz. Details of the parallel dividing process in the image area dividing circuit 2 will be described later. For the sake of simplicity, it is assumed here that there are present eight pieces of data on one scanning line of each of the divided screens for the signals Y, $C_W$ and $C_N$ as shown in Figure 2.

By the data distributing circuit 11, the data $Y_1$, $Y_3$, $Y_5$ and $Y_7$ in odd-numbered places of the signal Y are distributed to the error-correcting code encoding circuit 12a of one of the channels and the data $Y_2$, $Y_4$, $Y_6$ and Y8 in the even-numbered places are distributed to the error-correcting code encoding circuit 12b of the other channel.

At this time, while the data for the signals $C_W$ and $C_N$ are also to be distributed, since the frequency bandwidth of the chrominance component signals $C_W$ and $C_N$ is only 1/2 of that of the luminance component signal Y, transmission of half the number of pieces of these data suffice for the purpose. Therefore, in the present embodiment, $C_{W2}$, $C_{W4}$, $C_{W6}$ and $C_{W8}$, and $C_{N2}$, $C_{N4}$, $C_{N6}$ and $C_{N8}$ in the even-numbered places, for example, are discarded, and $C_{W1}$, $C_{N1}$, $C_{W5}$ and $C_{N5}$ are distributed to one channel, and $C_{W3}$, $C_{N3}$, $C_{W7}$ and $C_{N7}$ are distributed to the other channel, and thus, the luminance data at each sample point and the chrominance data in its vicinity are adapted to be uniformly distributed.

The sampling frequency of the data from the input to the data distributing circuit 11 to the output of the modulators 14a and 14b is 16.2 MHz as previously described, and the circuit devices for processing signals at such a sampling frequency are easily obtained by adaption to this purpose of the circuit devices for digital VTR of the current standard system (PAL or NTSC system) or the like.

The data in each of the channels are encoded to Reed-Solomon product codes in the error-correcting code encoding circuits 12a and 12b and are converted by the parallel/serial converters 15a and 15b into serial data at 129.6 MB/s data rate. A magnetic head capable of recording data at such a data rate can be manufactured using the current magnetic head technique without much difficulty.

According to the present embodiment, the signal processing portions 10 - 40 supplied with the outputs of the image area dividing circuit 2 are each provided with a data distributing circuit 11, etc, whereby each of the signal processing portions 10 - 40 and the recording head portions 50 - 80 serially connected thereto is arranged in two channels so that in total eight channels of parallel transmission system are provided. Therefore, the data rate transferred through each channel has been enabled to be reduced and recording (transfer) of digital data of the HD video signal has been made easy.

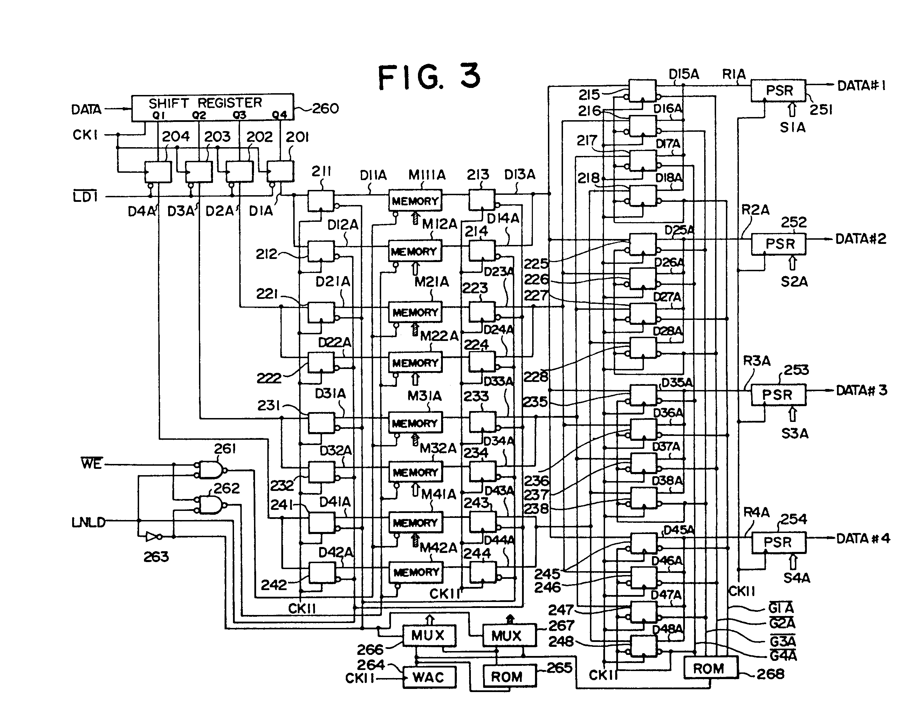

The image area dividing circuit 2 in use for an embodiment of the present invention will be described below with reference to Figure 3. The circuit of Figure 3 is separately provided for each of the digital luminance signal and the digital chrominance signals $C_W$ and $C_N$.

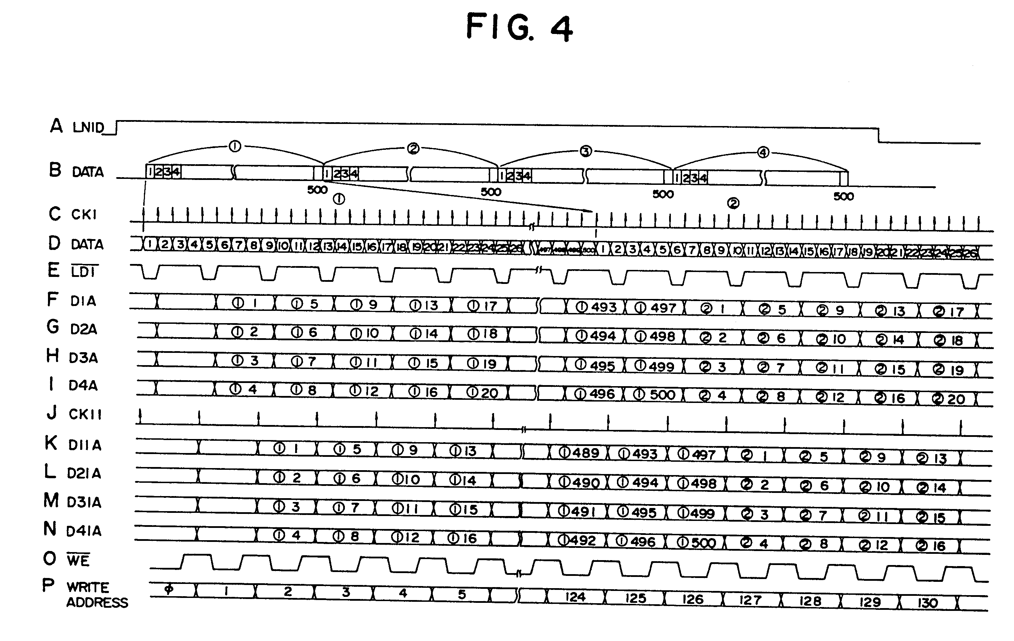

Eight bit parallel data (B, D in Figure 4) of the digital video signal (the luminance component signal Y or digital chrominance component signal $C_W$ or $C_N$) from the analog/digital converter 1 of the digital VTR of Figure 1 is supplied to a shift register 260. Since the digital video signal for one screen is made up of 2000 samples in the horizontal direction and 1050 lines in the vertical direction, and this digital video signal is equally divided into four sections for each line, 500 samples each thereof will be sequentially called the first - fourth series, (1) - (4). A sample clock CK1 (C in Figure 4) at the frequency of 64.8 MHz (the period is represented by T) is supplied to the shift register 260 whereby the digital video signal is shifted. Four-bit outputs Q4 - Q1 of the shift register 260 are supplied, respectively, to four registers 201 - 204, each thereof being provided with an input enable terminal, and latched therein by a load pulse $\overline{LD1}$ (E in Figure 4), having a frequency of 16.2 MHz and which goes low every 4-T period for the duration of 1 T, so as to cause output in parallel. The clock CK1 is also supplied to these registers 201 - 204. Each of the output data series D1A - D4A (F - I in Figure 4) of the registers 201 - 204 are supplied to registers 211, 212; 221, 222; 231, 232; and 241, 242, each thereof being provided with output enable terminals, and latched by a clock CK11 (J in Figure 4) at a frequency of 16.2 MHz.

To the output enable terminals of the registers 211, 221, 231 and 241 is supplied the output of an inverter 263 which is an inverted form of the line identification pulse LNID (A in Figure 4) which is alternately brought high and low at intervals of one line, while the line identification pulse LNID is supplied as it is to the output enable terminals of the registers 212, 222, 232 and 242. Hence, the registers 211, 221, 231 and 241 and the registers 212, 222, 232 and 242 output their data alternately for each line period. That is, when the line identification pulse LNID is at the high level, output data series D11A, D21A, D31A and D41A (K - N in Figure 4) from the registers 211, 221, 231 and 241 are supplied to memories M11A, M21A, M31A and M41A, respectively, and when the line identification pulse LNID is at the low level, output data series D12A, D22A, D32A and D42A from the registers 212, 222, 232 and 242 are supplied to memories M12A, M22A, M32A and M42A, respectively.

A write enable pulse $\overline{WE}$ (0 in Figure 4) having a frequency of 16.2 MHz and a duty ratio of 50% is supplied to OR gates 261 and 262. Further, the line identification pulse LNID is supplied to the OR gate 261 and the output of the inverter 263 which inverts the line identification pulse LNID is supplied to the OR gate 262. The output of the OR gate 261 is supplied to the memories M11A, M21A, M31A and M41A as a write enable pulse, and the output of the OR gate 262 is supplied to the memories M12A, M22A, M32A and M42A as a write enable pulse. Hence, when the line identification pulse LNID is at the high level, the memories M11A, M21A, M31A and M41A are brought into a write state, while the memories M12A, M22A, M32A and M42A are brought into a read state. When the line identification pulse LNID is at the low level, the memories M11A, M21A, M31A, and M41A are brought into a read state, while the memories M12A, M22A, M32A and M42A are brought into a write state. These memories can meet the desired purpose if provided with 1k x 8 bits or so of capacity.

The clock CK 11 is supplied to an address counter 264, and a write address therefrom is supplied to each of the memories M12A, M22A, M32A and M42A through a multiplexer 266 which is controlled for switching by the output of the inverter 263 i.e. the inverse of the line identification pulse. The write address from the address counter 264 is supplied to each of the memories M11A, M21A, M31A and M41A through a multiplexer 267 which is controlled for switching by the inverted line identification pulse supplied by the inverter 263. Further, the write address from the address counter 264 is supplied to a ROM 265 to be subjected therein to an address conversion described below and the thus obtained read address is supplied through the multiplexer 266 to each of the memories M12A, M22A, M32A and M42A. The read address from the ROM 265 is supplied through the multiplexer 267 to each of the memories M11A, M21A, M31A and M41A.

The write address of each memory, as indicated by P in Figure 4, is a regular address sequentially incremented as 0, 1, 2, 3 .. .. . The memory M11A is written in, for example, with the data of the first series (1) at the address 2 - 126, with the data of the second series (2) at the address 127-251, with the data of the third series (3) at the address 252 - 376, and with the data of the fourth series (4) at the address 377-501. From the temporal viewpoint, these data are of every fourth sample.

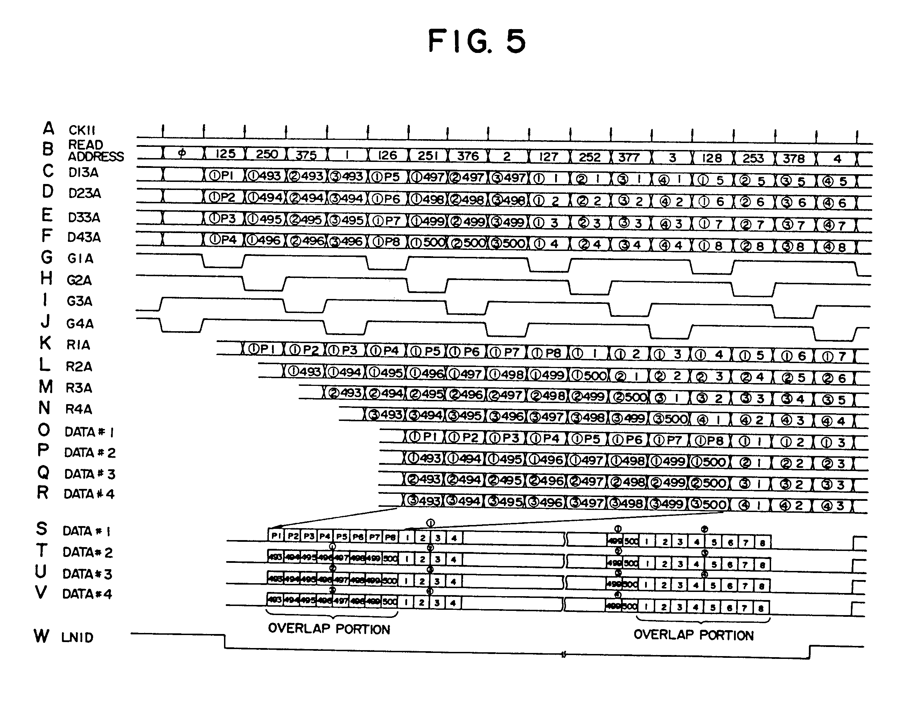

When the line identification pulse LNID (W in Figure 5) is at the low level, the data series read out from the memories M11A, M21A, M31A and M41A are supplied, respectively, to registers 213, 223, 233 and 243, each thereof being provided with an output enable terminal, and latched by the clock CK11 (A in Figure 5). When the line identification pulse LNID is at the high level, the data read out from the memories M12A, M22A, M32A and M42A are supplied, respectively, to registers 214, 224, 234 and 244, each thereof being provided with an output enable terminal, and latched by the clock CK11. As described above, the read address of each memory is obtained by address conversion in the ROM 265, and the same is arranged in the order of 0, 125, 250, 375, 1, 126, 251, 376 .. .. , with two reads occurring for each of the addresses for overlap portions at the front and the rear and one read each occuring of the address for the first series (1), second series (2), third series (3), and the fourth series (4) in between. In other words, the data samples which are located at the front and rear edges of picture areas are read out twice from the memories in order to protect the lacking or discrepancy of the data at those areas. As is apparent from Figure 5B, the read addresses 0 to 376 shows the last two samples of the preceding data series, respectively. Thereafter, the data signals in each data series are conventionally read out from the memories in accordance with the read addresses 2,127,252,377.

To the output enable terminals of the registers 213, 223, 233 and 243 is supplied the line identification pulse LNID (W in Figure 5) which is alternately brought high and low at intervals of one line and to the output enable terminal of the registers 214, 224, 234 and 244, is supplied the inverted pulse produced by the inverter 263 from the line identification pulse LNID. Therefore, the registers 211, 221, 231 and 241 and the registers 212, 222, 232 and 242 carry out output operations alternately for each line period.

Data series D13A (C in Figure 5) and D14A from the registers 213 and 214 are supplied to registers 215, 225, 235 and 245, each of which is provided with input and output enable terminals. Data series D23A (D in Figure 5) and D24A from the registers 223 and 224 are supplied to registers 216, 226, 236 and 246, each of which is provided with input and output enable terminals. Data series D33A (E in Figure 5) and D34A from the registers 233 and 234 are supplied to registers 217, 227, 237 and 247, each of which is provided with input and output enable terminals. Data series D43A (F in Figure 5) and D44A from the registers 243 and 244 are supplied to registers 218, 228, 238 and 248, each of which is provided with input and output enable terminals. Incidentally, P1 - P8 in Figure 5 indicate invalid data.

While the clock CK 11 is supplied to the registers 215 - 218, 225 - 228, 235 - 238 and 245 - 248, the write address from the write address counter 264 is subjected to address conversion by a ROM 268 and 4-bit control signals $\overline{G1A}$ - $\overline{G4A}$ (G, N, I, and J in Figure 5) from the ROM 268 are supplied to their input enable terminals and output enable terminals, and thereby, inputs thereto and outputs therefrom are controlled. These control signals $\overline{G1A}$ - $\overline{G4A}$ have a frequency of 4.05 MHz and are held at the low level for a 4-T period at intervals of a 16-T period, and their phases are shifted by 4T from one another.

The output data series D13A, D23A, D33A and D43A from the registers 213, 223, 233 and 243 are latched, respectively, by the registers 215 - 218 when the control signal $\overline{G1A}$ is at the low level, by the registers 225 - 228 when the control signal $\overline{G2A}$ is at the low level, by the registers 235 - 238 when the control signal $\overline{G3A}$ is at the low level, and by the registers 245 - 248 when the control signal $\overline{G4A}$ is at the low level.

As apparent from C - F in Figure 5, the registers 215 - 218 only latch the data of the first series (1), the registers 225 - 228 only latch the data of the second series (2), the registers 235 - 238 only latch the data of the third series (3), and the registers 245 - 248 only latch the data of the fourth series (4), each data thereof including overlap portions at the front and rear.

The data series of the first series (1) latched by the registers 215 - 218 is sequentially supplied to a programmable shift register 251 in the order of the control signals $\overline{G1A}$ - $\overline{G4A}$. The data series of the second series (2) latched by the registers 225 - 228 is sequentially supplied to a programmable shift register 252 in the order of the control signals $\overline{G1A}$ - $\overline{G4A}$. The data series of the third series (3) latched by the registers 235 - 238 is sequentially supplied to a programmable shift register 253 in the order of the control signals $\overline{G1A}$ - $\overline{G4A}$. The data series of the fourth series (4) latched by the registers 245 - 248 is sequentially supplied to a programmable shift register 254 in the order of the control signals $\overline{G1A}$ - $\overline{G4A}$.

Each of the data series R1A - R4A supplied to the programmable shift registers 251 - 254 are indicated by K - N in Figure 5, which are not in phase with one another. Relative values of shift amounts S1A, S2A, S3A and S4A of these programmable shift registers 251 - 254 are set to a 4-, 3-, 2- and 1-sample period, respectively. These programmable shift registers 251 - 254 are supplied with the clock CK11 as the shift pulse.

Thus, from these programmable shift registers 251 - 254 are output digital signals DATA#1 - DATA#4 (O - R and S - V in Figure 5), which are the digital video signals for four screens, namely the original screen divided into four sections in the horizontal direction and expanded to the size of the original screen and provided with overlap portions at both sides thereof.

The four digital signals DATA#1 - DATA#4 are supplied to the data distributing circuit 11 of the signal processing portions 10 - 40, respectively.

**Claims**

1. A method of converting and processing a plurality of digital data signals, which comprise first, second and third component video signals (Y, $C_W$, $C_N$), the method comprising the steps of:

spatially dividing (2) each of said digital data signals corresponding to a displayed picture into N sections thereof, wherein N is an integer larger than 2;

expanding (2) the divided digital data signals to have a period N times the period of the clock frequency of said digital data signals to produce divided and expanded digital data signals; and

distributing (11) each of the divided and expanded digital data signals into a respective set of two channels of transmission lines by disposing data of said first component video signal in said two channels of transmission lines alternately with a sample space therebetween; and

discarding alternate data of each of said second and third component video signals and transmitting the remaining alternate data of said second and third component video signals alternately during those sample spaces not occupied by said first component video signal of each of the transmission lines.

**2.** A method according to claim 1, in which said first component video signal comprises a luminance component signal and said second and third component video signals comprise chrominance component signals.

**3.** Apparatus for converting and processing a plurality of digital data signals, which comprise first, second and third component video signals characterised in that it comprises

means (2) for spatially dividing each of said digital data signals corresponding to a displayed picture into N sections thereof, wherein N is an integer larger than 2;

means (2) for expanding each of the divided digital data signals to have a period N times the period of the clock frequency of said digital data signals; and

means (11) for distributing each of the divided and expanded digital data signals from said expanding means into a respective set of two channels of transmission lines;

said distributing means (11) comprising means for disposing said first component video signal in said two channels of transmission lines alternately with a sample space therebetween; and

means for discarding alternate data samples of each of said second and third component video signals and means for transmitting the remaining alternate data samples of said second and third component video signals during the sample spaces not occupied by said first video signal of each of the transmission lines alternately.

**4.** Apparatus according to claim 3, in which N is selected as 4 and the clock frequencies of each of said divided component video signals are reduced to one fourth, wherein the component video signals corresponding to the displayed picture are transferred through 4 transmitting circuits.

**5.** Apparatus according to claim 3 or 4, in which said first component video signal comprises a luminance component signal and said second and third component video signals comprise chrominance component signals.

**6.** Apparatus according to claim 3 or 4, in which said first, second and third component video signals comprise green, red and blue component signals, respectively.

**Revendications**

**1.** Un procédé de conversion et de traitement d'un ensemble de signaux de données numériques qui comprennent des premier, second et troisième signaux vidéo de composantes ($Y$, $C_W$, $C_N$), ce procédé comprenant les étapes suivantes :

on divise de façon spatiale (2) chacun des signaux de données numériques correspondant à une image visualisée, en N sections de ces signaux, le nombre N étant un entier supérieur à 2;

on étend (2) les signaux de données numériques divisés de façon qu'ils aient une période égale à N fois la période correspondant à la fréquence d'horloge des signaux de données numériques, pour produire des signaux de données numériques divisés et étendus; et

on répartit (11) chacun des signaux de données numériques divisés et étendus dans un ensemble respectif de deux canaux de lignes de transmission, en disposant alternativement des données du premier signal vidéo de composante dans les deux canaux de lignes de transmission, avec un espace d'échantillon entre eux; et

on rejette des données alternées de chacun des second et troisième signaux vidéo de composantes et on transmet alternativement les données alternées restantes des second et troisième signaux vidéo de composantes pendant les espaces d'échantillons qui ne sont pas occupés par le premier signal vidéo de composante de chacune des lignes de transmission.

**2.** Un procédé selon la revendication 1, dans lequel le premier signal vidéo de composante consiste en un signal de composante de luminance et les second et troisième signaux vidéo de composantes consistent en signaux de composantes de chrominance.

**3.** Appareil pour la conversion et le traitement d'un ensemble de signaux de données numériques qui comprennent des premier, second et troisième signaux vidéo de composantes, caractérisé en ce qu'il comprend :

des moyens (2) pour diviser de façon spatiale chacun des signaux de données numériques correspondant à une image visualisée en N sections de ces signaux, le nombre N étant un entier supérieur à 2;

des moyens (2) pour étendre chacun des signaux de données numériques divisés, de façon qu'il ait une période égale à N fois la période correspondant à la fréquence d'horloge des signaux de données numériques; et

des moyens (11) destinés à répartir chacun des signaux de données numériques divisés et étendus, provenant des moyens d'extension, dans un ensemble respectif de deux canaux de lignes de transmission;

les moyens de répartition (11) comprenant des moyens qui sont destinés à disposer alternativement le premier signal vidéo de composante dans les deux canaux de lignes de transmission, avec un espace d'échantillon entre eux; et

des moyens destinés à rejeter des échantillons de données alternés de chacun des second et troisième signaux vidéo de composantes, et des moyens destinés à transmettre les échantillons de données alternés restants des second et troisième signaux vidéo de composantes, pendant les espaces d'échantillons qui ne sont pas occupés par le premier signal vidéo de chacune des lignes de transmission, en alternance.

4. Appareil selon la revendication 3, dans lequel le nombre N est sélectionné égal à 4 et les fréquences d'horloge de chacun des signaux vidéo de composantes divisés sont réduites au quart, et les signaux vidéo de composantes correspondant à l'image visualisée sont transmis par quatre circuits de transmission.

5. Appareil selon la revendication 3 ou 4, dans lequel le premier signal vidéo de composante consiste en un signal de composante de luminance et les second et troisième signaux vidéo de composantes consistent en signaux de composantes de chrominance.

6. Appareil selon la revendication 3 ou 4, dans lequel les premier, second et troisième signaux vidéo de composantes sont respectivement des signaux de composantes verte, rouge et bleue.

**Patentansprüche**

1. Verfahren zur Umwandlung und Verarbeitung einer Vielzahl von digitalen Datensignalen, welche erste, zweite und dritte Videokomponenetensignale (Y, Cw, Cn) enthalten, gekennzeichnet durch folgende Verfahrensschritte:

räumliches Aufteilen jedes dieser digitalen Datensignale entsprechend N Ausschnitten eines dargestellten Bildes, wobei N eine ganze Zahl größer 2 ist;

Erweitern der aufgeteilten digitalen Datensignale, so daß diese eine N-fache Periode der Periode der Taktfrequenz der ursprünglichen digitalen Datensignale aufweisen, zur Erzeugung von aufgeteilten und erweiterten digitalen Datensignalen;

Verteilen (11) jedes der aufgeteilten und erweiterten digitalen Datensignale auf jeweils eine Gruppe von zwei Kanälen von Übertragungswegen, wobei die Daten des ersten Videokomponentensignals den zwei Kanälen der Übertragungswege wechselweise mit dazwischenliegenden Leerräumen zugeordnet werden;

Verwerfen der jeweils zweiten Daten der zweiten und dritten Videokomponentensignale und Übertragen der jeweils verbleibenden zweiten Daten dieser zweiten und dritten Videokomponentensignale wechselweise während jener Leerräume, die nicht durch das erste Videokomponentensignal belegt sind, auf jedem der Übertragungswege.

2. Verfahren nach Anspruch 1, bei dem das erste Videokomponentensignal ein Luminanz-Komponentensignal aufweist und bei dem die zweiten und dritten Videokomponentensignale Chrominanz-Komponentensignale aufweisen.

3. Vorrichtung zur Umwandlung und Verarbeitung einer Vielzahl von digitalen Datensignalen, welche erste, zweite und dritte Videokomponenetensignale aufweisen, gekennzeichnet durch

Mittel (2) zum räumlichen Aufteilen jedes dieser digitalen Datensignale entsprechend N Ausschnitten eines dargestellten Bildes, wobei N eine ganze Zahl größer 2 ist;

Mittel (2) zum Erweitern jedes der aufgeteilten digitalen Datensignale zur Erreichung einer N-fachen Periode der Periode der Taktfrequenz der digitalen Datensignale;

Mittel (11) zum Verteilen jedes der aufgeteilten und erweiterten digitalen Datensignale von den Mitteln zur Erweiterung auf jeweils eine Gruppe von zwei Kanälen von Übertragungswegen;

Mittel (11) zur Verteilung, welche Mittel aufweisen um das erste Videokomponenetensignal in den zwei Kanälen der Übertragungswege wechselweise mit dazwischen liegenden Leerräumen anzuordnen;und

Mittel zum Verwerfen der jeweils zweiten Daten jedes der zweiten und dritten Videokomponentensignale und Mittel zum Übertragen der jeweils zweiten verbliebenen Daten der zweiten und dritten Videokomponenetensignale während der Leerräume, die nicht vom ersten Videokomponentensignal besetzt sind, wechselweise auf jedem der Übertragungswege.

4.	Vorrichtung nach Anspruch 3, in der N zu 4 gewählt ist und die Taktfrequenzen jeder der aufgeteilten Videokomponentensignale auf ein Viertel reduziert sind, und in der die Videokomponentensignale entsprechend dem dargestellten Bild über vier Übertragungskreise übertragen werden.

5.	Vorrichtung nach Anspruch 3 oder 4, in der das erste Videokomponentensignal ein Luminanz-Komponentensignal aufweist und die zweiten und dritten Videokomponentensignale Chrominanzkomponentensignale aufweisen.

6.	Vorrichtung nach Anspruch 3 oder 4, in der die ersten, zweiten und dritten Videokomponentensignale jeweils grüne, rote und blaue Komponentensignale aufweisen.

# FIG. I

SIGNAL PROCESSING
PORTION 10

50 RECORDING HEAD PORTION

EP 0 224 366 B1

FIG. 2

EP 0 224 366 B1

FIG. 3

EP 0 224 366 B1

FIG. 4

EP 0 224 366 B1

# FIG. 5

OVERLAP PORTION

OVERLAP PORTION